# EUROPEAN PATENT SPECIFICATION

(11) **EP 3 674 143 B1**
(45) Date of publication and mention of the grant of the patent: **18.05.2022**
(21) Application number: 19216143.8
(22) Date of filing: 13.12.2019
(51) Int. Cl.: B60R 13/00

(54) **ILLUMINATED EMBLEM FOR A VEHICLE**
BELEUCHTETES EMBLEM FÜR EIN FAHRZEUG
EMBLÈME ÉCLAIRÉ POUR VÉHICULE

(30) Priority: 28.12.2018 ES 201831295
(43) Date of publication of application: 01.07.2020
(73) Proprietor: Seat, S.A., 08760 Martorell (ES)
(72) Inventor: DE MENDONÇA MAIA, André, 08760 MARTORELL (ES); BENDAÑA SUEIRO, Xesús, 08760 MARTORELL (ES); HUPEL, Martin, 08760 MARTORELL (ES)
(74) Representative: Ponti & Partners, S.L.P

(56) References cited:
- EP-A2- 1 657 758
- JP-A- 2005 215 596
- JP-A- 2014 004 956
- JP-A- 2014 026 000

## Description

The present invention relates in general to an illuminated emblem for an automotive vehicle suitable for preferably being installed at some point of the vehicle body, the main function thereof being to produce homogeneous illumination of the entire perimeter of the emblem.

### Background of the invention

Different systems for generating a specific illumination of an emblem which is generally installed in the outer part of a vehicle, wherein the emblem comprises a front portion having a logotype are known in the automotive vehicle industry today.

On one hand, directly illuminated emblems, i.e. illuminated in a forward direction on the emblem, via the provision of light guides which direct the light from the light sources to the emblem are known. On the other hand, illuminated emblems wherein the light exits in the lateral direction of the emblem and the perimeter of the emblem is illuminated, therefore generating an indirect illumination of the emblem, are known.

For example, patent document US20150239390 describes an emblem illuminated by lateral illumination on the periphery of the emblem. This emblem is formed by a body, a lighting device and a controller. The emblem body is configured to be positioned on a portion of a vehicle, and has a translucent portion (60) arranged on the sides and an opaque portion, whereas the lighting device is configured and arranged to disperse light emitted by a plurality of light sources (84) distributed at different points through the translucent portion (60) of the emblem body. For the lateral illumination on the periphery of the emblem, this US patent uses a light guide for transmitting internal light from the different point light sources (84), the light guide being an expensive additional component. This U.S. patent has the enormous drawback that it does not describe any element which controls the homogenization of the outgoing light created by different point light sources, whereby the user inevitably perceives different light intensities in various areas of the emblem: darker areas (where there is no light source nearby) and lighter areas (where there is a light source nearby). Therefore, it is evident that this US patent fails to generate one and the same light intensity in each and every one of the different areas forming the perimeter of the emblem (regardless of whether or not the emblem segment is near a light source).

JP 2014 004956 A, JP 2005 215596 A and JP 2014 026000 A disclose an illuminated emblem for a vehicle. In all these references a light distribution concept based on light guides is used, so that the light guide collects the light beams generated by the light emitters and, by means of internal light transmission in the light guide, distributes them inside said light guide. Light guides have the disadvantages that are very expensive. In irregular geometries such as logos, they are even more expensive to manufacture. Furthermore, a light guide constitutes an additional piece, with associated assembly problems and tolerances problems due to having a component that must occupy the entire interior space, controlling air gaps between the light guide and surrounding components depending on whether an internal light transmission or light extraction is aimed. JP 2014 004956 A discloses an illuminated emblem for a vehicle according to the preamble of claim 1.

Furthermore, it must be taken into account that emblems have very small thicknesses, which even further complicates the homogenization of the outgoing light, given that the space between the light sources and the front portion of the emblem where the light exits is very limited. By way of reference, the distances between the light sources and the front portion of the emblem can be in the order of 0.5 to 1 mm. Under these conditions of so little space, in the devices known up until now, the light generated by the point light sources is concentrated in the areas near a light source.

The above-described problem of uniformly distributing the outgoing light on the entire perimeter of the emblem having point light sources distributed in the emblem becomes particularly accentuated in those cases where the logotype of the emblem has non-homogeneous and/or complex geometries, where it may have wider areas, narrower areas, corners, etc., even further complicating the homogeneous illumination of the perimeter of the emblem.

Furthermore, in those cases where the emblems have "narrow logo" geometries (i.e. where the distance between the light source and the perimeter of the emblem is small) this problem of having a variable light intensity with areas having excessive light and areas having insufficient light is even more pronounced.

In view of the foregoing, there is a clear need for an illuminated emblem that is indirectly illuminated on its periphery to be installed in an automotive vehicle, which allows an outside observer to perceive one and the same light intensity on the entire perimeter of the emblem, i.e. without distinguishing segments with a greater outgoing light intensity and segments with a lower outgoing light intensity owing to the fact of being close to or far from a light source. Furthermore, it is required for the illuminated emblem not to use light guides as these are expensive elements, and to be as simple as possible, easy to manufacture, easy to assemble from parts, and to have a minimum number of components.

### Description of the invention

The object of the present invention is to provide an illuminated emblem for an automotive vehicle suitable for preferably being installed in a portion of the outer automotive vehicle body which solves the mentioned drawbacks and has the advantages described below. According to a first aspect, the present invention provides an illuminated emblem for a vehicle

with the features of claim 1.

As a result of the advantageous creation of this internal reflection chamber for the light beams, the light beams are made to internally bounce around constantly since they are reflected as they strike the reflective inner walls of the rear casing and of the also reflective front element, thereby filling the entire cavity with light and more homogeneously distributing the light along the perimetral portion of the emblem. The light that is bouncing around constantly inside the internal reflection chamber escapes from said cavity only through the perimetral portion of the translucent diffusion filter, i.e. through a portion of the perimeter of the emblem, outwardly.

Preferably, the at least one illumination circuit is also of a color that reflects light. Therefore, the surface of the at least one illumination circuit facing the inside of the cavity can also function as a light reflector, and an internal reflection chamber for the light beams emitted by the plurality of light sources can thereby be created in the space defined by the inner face of the front element, the inner surface of the rear casing and at least the surface of the illumination circuit oriented towards the inside of said cavity.

A possible embodiment of the at least one illumination circuit is a printed circuit board, in which different light sources are fixed thereon by any known means. The illumination circuit or printed circuit board will be configured to power and activate the plurality of light sources based on different orders.

In a first embodiment, the illumination circuit is manufactured fixed to the base of the rear casing and with the light sources aimed upwards (i.e. towards the front element).

In a second embodiment, the illumination circuit is manufactured fixed in the inner portion of the front element and with the light sources aimed downwards (i.e. towards the base of the rear casing).

Preferably, the plurality of light sources are arranged distributed in different specific positions in the at least one illumination circuit. These specific positions are selected based on the particular geometry of each logotype. In a possible arrangement thereof, they can be arranged aligned in one of the segments forming the logotype.

With respect to the plurality of light sources, each one can be of any desired color or of a combination of colors, based on the requirements of each case particular. The light source can include any known form of light source. Light emitting diodes (LEDs) are selected as the preferred light source, although can be used any other form of lighting configured to emit light, such as fluorescent lighting, organic LED (OLED), polymer LED (PLED), or solid-state lighting. With respect to the color that reflects light, said is preferably selected from: white or metallic color. Both colors have been found to be satisfactory in optimally reflecting (i.e. all or virtually all) the light beams. If the color white is selected, which color reflects all the light without absorbing any color of the light spectrum, an internal white reflection chamber is created; and if metallic color is selected, then a metalized internal reflection chamber.

"Reflection of the light" is understood as when all or part of the light reaches an object and bounces off or is reflected by that object. The light can be reflected specularly (directly) or diffusely. Specular reflection occurs when light is reflected on a smooth or polished surface.

The present invention seeks to create a constant reflection of light rays inside the internal reflection chamber of a more diffuse type, whereby at least the inner face of the front element and/or the inner surface of the rear casing and/or optionally the at least one surface of the illumination circuit can be non-smooth and unpolished surfaces, i.e. having textures, to favor diffuse reflection. Therefore, according to a preferred embodiment of the invention, at least one of the inner surfaces of the walls of the rear casing and/or the at least one inner face of the front element has a surface finish roughness, such that the incident light on this/these rough surface(s) is randomly scattered in all directions, thereby achieving a more uniform outgoing light. In other words, the light beams striking said rough surfaces and being reflected in all directions is potentiated, and as a result the homogeneity of the light beams inside the chamber and therefore the uniformity of the outgoing light intensity on the perimeter of the emblem are improved.

Preferably, this/these rough surface(s) does/do not follow a predefined pattern, but rather follows/follow a random distribution, thus favoring diffusion of the light beams. Furthermore, for the purpose of increasing the light distribution homogenization efficiency the rough texture is generated on a microscopic scale or smaller. The applicant has observed that the rough texture preferably ranges between +10 µm and -10 µm between the highest points and the lowest points of the section.

The light diffusion filter is preferably manufactured from a thermoplastic polymer that is sufficiently transparent for light to go through it. A possible thermoplastic polymer that can be used is the polymethyl methacrylate (PMMA) with a treatment with particles therein, which has the capacity to transmit the incident light in all directions, thereby achieving a uniformly illuminated surface of the light diffusion filter. The greater the light diffusion, the lower the light transmission, and vice versa. Likewise, the greater the homogeneity, the lower the efficiency (emitted light), and vice versa. The thickness (i.e. the height) of the light diffusion filter also has an influence on in the degree of light diffusion in the emblem.

"Light diffusion" is understood as the phenomenon whereby a ray of light travels through a material without being absorbed but is subjected to repeated scattering effects which change the direction of its trajectory, resulting in a random transmission direction of the ray of light.

"Light transmission" is understood as the phenomenon wherein light goes through a surface or object. Transmission can be direct (when the light goes through an object and no changes in direction or in the quality of that light occur) or diffuse (when the light passes through a transparent or semi-transparent object with texture). This invention seeks a light transmission in the light diffusion filter that is a "diffuse transmission", such that the outgoing light of the emblem is deviated in many directions. The light transmitted through the light diffusion filter is thereby softer, with less contrast, lower intensity, and generates a gentler transition between light and dark (compared with direct light).

By way of example, the diffusion filter is formed by a profile following the same shape as the perimetral contour of the front element of the emblem. Possible dimensions of the light diffusion filter are:
- Maximum height (maximum thickness) of the light diffusion filter (i.e. the elevation between the upper surface of the rear casing and the front element): comprised between 1 and 2.5 mm.
- Thickness of the light diffusion filter (in the light beam outlet direction): comprised between 1 and 2.5 mm.

According to a possible embodiment of the rear casing, said rear casing is manufactured from a rigid material and formed by a planar base and also planar side walls. As previously discussed, the inner faces of the base and side walls will be planar and can be rough so that the reflection of the light rays on said surfaces is diffuse.

According to a possible embodiment of the front element, said front element is manufactured from a rigid material, wherein on the face seen by the user it comprises the logo with the desired finish, preferably with chrome-plated finishes. As previously discussed, the planar inner face of the front element can be rough, and the shape of the front element is substantially the shape of the logotype, which can have non-homogeneous or complex geometries.

According to a preferred embodiment of the invention, for the purpose of even further increasing the homogeneity and distribution of the outgoing light on the entire perimeter of the emblem, the emblem further comprises at least one light beam aperture geometry configured to open the generated light cone in at least one direction, such that it even further increases diffusion of the light beams inside the cavity. The provision of these geometries (which may consist, for example, of a cylinder) thereby distributes the light inside the chamber even better. Preferably, the emblem comprises more than one light beam aperture geometry, each of which is arranged in a different position in the emblem, i.e. they are distributed in specific positions in the emblem, based on the width and the particular geometry of each emblem segment.

The at least one light beam aperture geometry is preferably arranged between one of the plurality of light sources and the front element (in the axis of depth Z of the emblem segment), and between one of the plurality of light sources and the diffuser (on the transverse axis Y of the emblem segment).

According to a possible embodiment of the invention, the emblem has one light beam aperture geometry for each light source, wherein each aperture geometry is arranged on the transverse axis Y facing one source of the plurality of light sources, i.e. on the same line (axis Z) with a light source.

Preferably, the at least one light beam aperture geometry can be selected, for example, from: structures having a cylinder or triangular prism shape for opening the light field in a specific direction; or structures having a square, rectangular or cylindrical pyramid shape for opening the light cone in all directions.

In addition to the light beam aperture geometries, other geometries can also be arranged in the emblem, namely light beam screen geometries which generate small barriers close to the diffusion filter to prevent too much light from exiting through that area (especially in areas where the light sources and diffuser are close to prevent the outside observer from seeing a highly illuminated area). Preferably, the at least one light beam screen geometry is also arranged between one of the plurality of light sources and the diffusion filter.

In the same way as the light beam aperture geometries, the light beam screen geometries are arranged in specific positions in the emblem. These specific positions are selected based on the particular geometry of each logotype. Preferably, the at least one light beam aperture geometry is arranged facing one source of the plurality of light sources.

Preferably, the at least one light beam aperture geometry can be selected, for example, from: a planar wall, a cylindrical structure or a triangular prism. The height of said screen wall can be constant or variable (greatest height coinciding with the center of the cone of the light source and decreasing upon moving away from the light source.

As described above, the specific positions of each light beam screen geometry and each light beam aperture geometry are selected based on the particular geometry of each logotype. Namely, the width of the emblem segment is one of the main factors in determining the position and total number of screen geometries. It has been verified by the applicant that it is suitable to arrange one or more screen geometries in the "narrow" areas of the emblem, and in contrast, this is not so necessary in the "wide" areas. As a reference, a "narrow" area of the emblem is am area in which the distance between the light source and the perimetral diffusion filter is less than 20 mm.

In reference to the specific position of each screen geometry with respect to the axis transverse to the axis of alignment of the light sources (axis X), the screen geometry can be arranged close to the light diffusion filter (i.e. close to the perimetral edge) or close to a light source (i.e. in the portion nearest the axis X).

The main advantages arising from the present invention with respect to other solutions known in the state of the art are:
1. Indirect and very homogeneous illumination.
2. Smaller number of components in the emblem.
3. Lower thickness of the emblem.

### Brief description of the figures

To better understand what has been set forth, several drawings are attached wherein different practical embodiments are schematically depicted merely by way of non-limiting example.
Figure 1 depicts an exploded view of a first embodiment of a portion of an emblem according to the present invention, in which the different main components forming the emblem are observed.
Figure 2 schematically depicts a cross-section view of a specific segment of a portion of the emblem according to a second embodiment of the invention, in which the arrangement of the different components can be seen.
Figure 3 schematically depicts a cross-section view of another different segment of a portion of the emblem according to a third embodiment of the invention, in which the arrangement of the different components can be seen.
Figure 4 depicts a front view of the second embodiment of the complete emblem of the invention, in which there are included three different section lines: A-A, B-B and C-C.
Figure 5 depicts a rear view of the same embodiment as Figure 4, but in this case illustrating only the internal face the front element, in which there are light aperture geometries and light beam screen geometries.
Figure 6 depicts a view sectioned by A-A of Figure 4, in which there can be seen a specific longitudinal section of the emblem lower segment (hereinafter referred to as "narrow segment" owing to it having a small width).
Figure 7 depicts a view sectioned by B-B of Figure 4, in which there can be observed a specific cross section of the emblem "narrow segment".
Figure 8 depicts a view sectioned by C-C of Figure 4, in which there can be observed a specific cross section of the other wider emblem segment (hereinafter referred to as "wide segment").
Figure 9 schematically depicts a partial section view of two different possible light beam aperture geometries which intends to show the paths followed by the different rays of incident lights in said geometries and reflected on same.
Figure 10 schematically depicts a section view of an example of two different screen geometries which intends to show the paths followed by the different rays of incident lights in said geometries and reflected on same.

### Description of embodiments

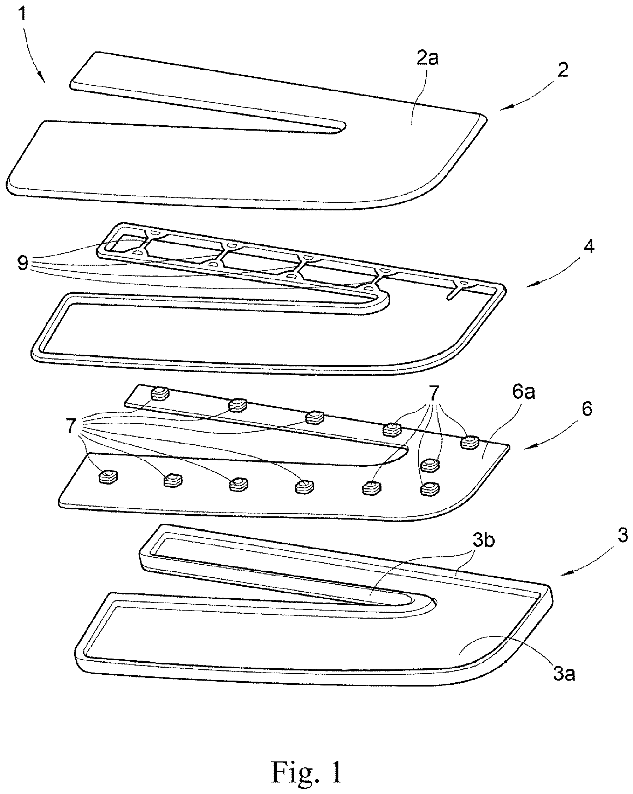

Embodiments of the present invention are described below in reference to Figures 1 to 10.

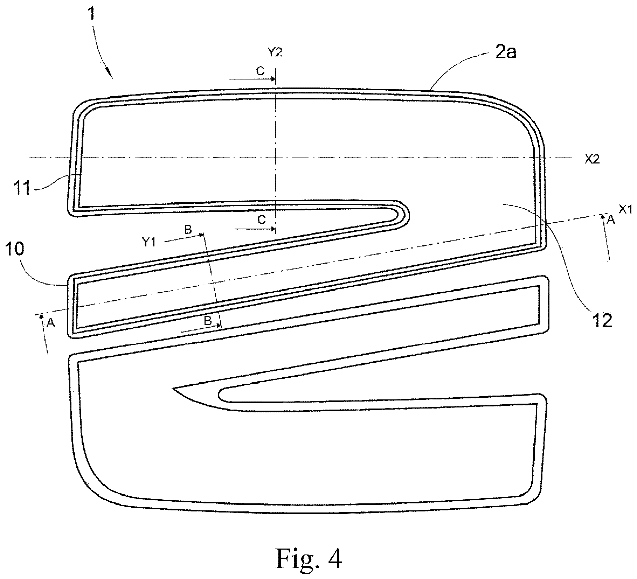

Figure 4 illustrates a possible embodiment of the complete emblem, formed by two different emblem portions making up the complete emblem when attached. The remaining figures refer only to the upper portion (1) of the emblem. Said Figure 4 shows the configuration of the upper portion (1) of the emblem, which is formed in turn by a lower "narrow" segment (10) and an upper "wide" segment (11) joined to one another in a junction area (12). The longitudinal axis (X1) of the "narrow" segment (10), the transverse axis (Y1) of said "narrow" segment (10), and with respect to the "wide" segment (11) the longitudinal axis (X2) and the transverse axis (Y2), are also depicted. The depicted emblem would be assembled on an outer surface of the vehicle and seen from the perspective of an outside observer.

In Figure 1, from top to bottom there can be seen a first embodiment of a portion of the emblem (1): the front element (2) with the shape of the upper portion of the logotype, the light diffusion filter (4) to allow the passage of light but at the same time achieve maximum homogeneity of the light, the illumination circuit (6) and the rear casing (3). In this embodiment, the illumination circuit (6) comprises a total of 12 light sources (7) distributed equidistantly along the narrow segment and the wide segment of the illumination circuit (6), 5 of which are arranged in the narrow segment (10) of the emblem (1) aligned following the longitudinal axis (X1) which is substantially parallel to the edges of said narrow segment of the illumination circuit (6), 6 of which are arranged in the wide segment (11) aligned following the longitudinal axis (X2) and the last one in the junction area (12) for the joining of both segments. In this example, the light diffusion filter (4) has a profile with a contour which reproduces the same perimetral shape as the perimetral edge of the front element (2) and has an opening therein, and wherein the narrow segment of the light diffusion filter (4) has four prolongations (9) for the joining between different points of two portions of the perimetral edge. In this first Figure 1 it can be seen how all the components of the portion (1) of the emblem have the same outer shape.

In this first embodiment of Figure 1, the illumination circuit (6) is fixed to the inner face of the base (3a) of the rear casing (3) and the light sources (7) aimed upwards (i.e. in the direction of axis Z). The prolongations (9) of the diffusion filter (4) perform the function of light beam aperture geometry and/or light beam screen geometries, as described below. Said geometries are injected into the light diffusion filter (4) itself, the three components being obtained from a single injection process. The method of manufacturing the emblem (1) according to this first embodiment preferably consists of the following:
- Injecting the front element (2).
- Injecting the rear casing (3).
- Injecting the light diffusion filter (4), obtaining the light beam aperture geometries and/or light beam screen geometries, when required, from the same mold.
- Fixing the illumination circuit (6) with the light sources (7) at the base of the rear casing (3) by means of any known mechanical adhesion process.
- Fixing the light diffusion filter (4) to the rear casing (3) by means of any known mechanical adhesion process.
- Fixing the front element (2) to the casing-diffusion filter assembly, preferably by means of vibration welding.

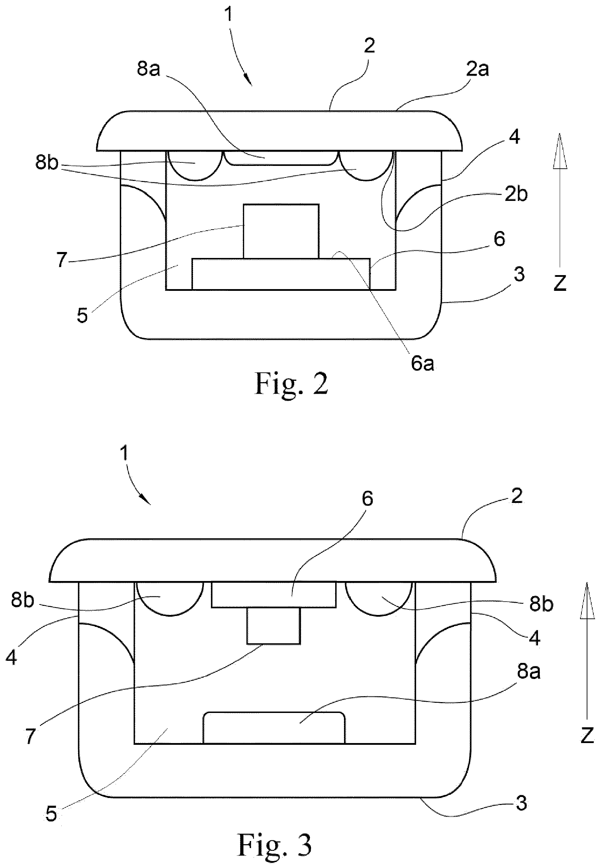

In the second embodiment shown in Figure 2, the illumination circuit (6) is fixed to the inner face of the base (3a) of the rear casing (3) and the light sources (7) are oriented aiming upwards (i.e. in the direction of axis Z). It shows one light beam aperture geometry (8a) and two light beam screen geometries (8b), all of which are arranged in the inner portion (2b) of the front element (2). It can be observed how the light beam aperture geometry (8a) is arranged facing the light source (7). Moreover, it can be seen how each light beam screen geometry (8b) is arranged between the diffusion filter (4) and the internal reflection cavity. In this case, the geometries (8a) and/or (8b) are integrated with the front element (2). The method of manufacturing the emblem (1) according to this second embodiment preferably consists of the following:
- Injecting the front element (2), obtaining geometries (8a) and/or (8b) (if they exist) from the same mold.
- Injecting the rear casing (3).
- Injection molding of the light diffusion filter (4) to the rear casing (3).
- Fixing the illumination circuit (6) with the light sources (7) at the base of the rear casing (3) by means of any known mechanical adhesion process.
- Fixing the front element (2) to the casing-diffusion filter assembly, preferably by means of vibration welding.

In the third embodiment shown in Figure 3, the illumination circuit (6) is fixed on the inner face of the front element (2) and with the light sources (7) oriented aiming downwards (i.e. towards the base (3a) of the rear casing (3), or in the direction opposite to axis Z). It shows two light beam screen geometries (8b) arranged in the inner portion (2b) of the front element (2) and one light beam aperture geometry (8a) arranged on the inner surface (3a) of the base of the rear casing (3). Like in the preceding embodiment, it can be seen how the light beam aperture geometry (8a) is arranged facing the light source (7). Moreover, it can be seen how each light beam screen geometry (8b) is arranged between the diffusion filter (4) and the internal reflection cavity. The process of obtaining this third embodiment preferably consists of the following:
- Injecting the front element (2), obtaining geometries (8b) (if they exist) from the same mold.
- Injecting the rear casing (3), obtaining geometries (8a) (if they exist) from the same mold.
- Injection molding of the light diffusion filter (4) to the rear casing (3).
- Fixing the illumination circuit (6) at the inner base of the front element (2) by means of any known mechanical adhesion process.
- Fixing the front element (2) to light diffusion filter (4), preferably by means of vibration welding.

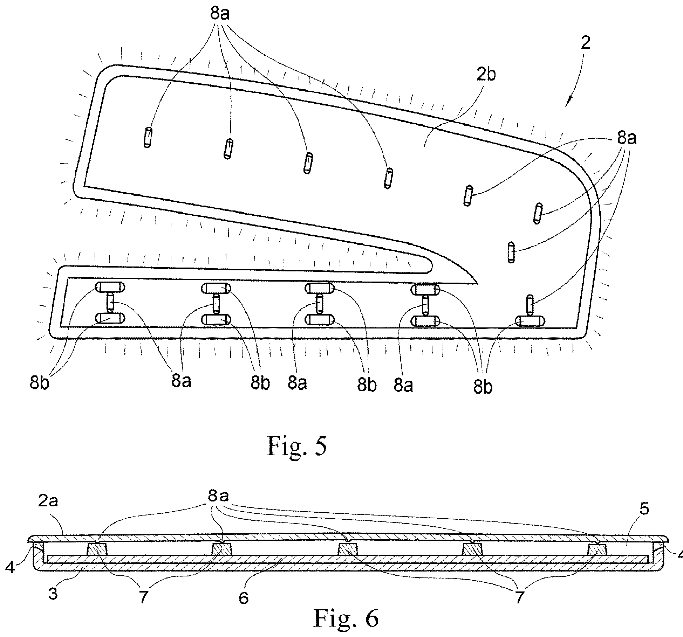

As can be seen in Figure 5, corresponding to the embodiment of Figure 4, the front element (2) comprises respective light beam aperture geometries (8a) aligned with each light source (7), and it additionally comprises in the "narrow segment" two light beam screen geometries (8b) aligned with each light source (7). The light aperture geometries (8a) open the field in the direction of alignment of the light sources, i.e. in the direction of axis X1 in the "narrow segment" and in the direction of axis X2 in the "wide segment". In this example of Figure 5, the distance between ends of the front element (2) (i.e. the width of the "wide segment") where a screen does not have to be made is 27 mm, whereas the distance between ends of the emblem (i.e. the width of the "narrow segment") where screen geometries are required is 13 mm.

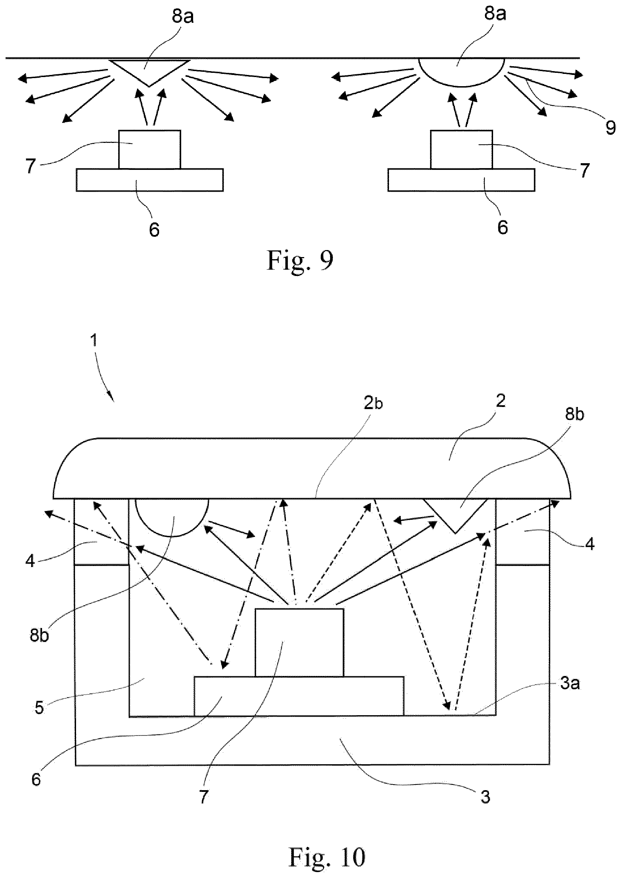

Figure 9 schematically depicts two different possible light beam aperture geometries (8a), in which the corresponding paths followed by the different rays of incident lights in said geometries (8a) and reflected on same outwardly, opening the light field in the direction of alignment of the light source (in this case in direction X1), are exemplified. The light beam aperture geometry (8a) arranged on the left would be the equivalent to a triangular prism and the light beam aperture geometry (8a) arranged on the left would be the equivalent to a cylinder with a semi-circular base.

Figure 6 shows a first section of the "narrow segment" of the emblem (1) which has five different light sources (7) arranged in a row, with a respective light aperture geometry (8a) arranged facing each of said light sources (7) and opening the field of the light beams in the direction of alignment of the light sources.

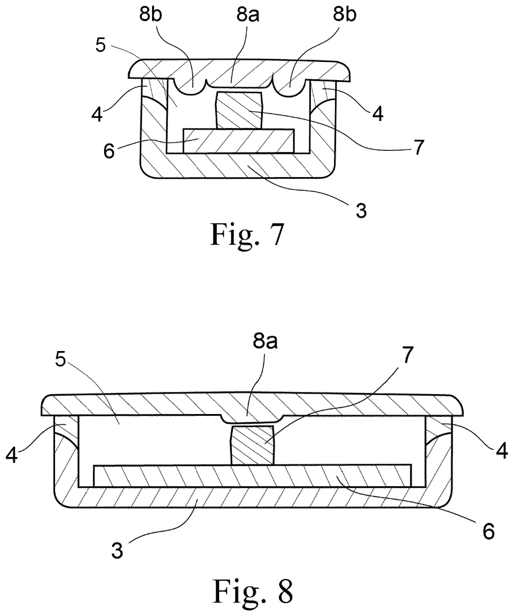

There can be observed in Figure 7 a second section of the "narrow segment" of the emblem (1), where there is a light source (7), and there can also be observed two light beam screen geometries (8b) arranged separated from one another and one light beam aperture geometry (8a) arranged facing said light source (7), and in which it can be perceived that all the geometries (8a, 8b) are manufactured integrated in the front element (2) itself. One manufacturing option is to manufacture the geometries (8a, 8b) by means of injection in the same injection mold as the front element (2).

There can be observed in Figure 8 a third section of the "wide segment" of the emblem (1), in which there is also a light source (7), but in this case without screen geometries and with a light beam aperture geometry (8a) arranged facing said light source (7), and in which it can be perceived that the light aperture geometries (8a) are also manufactured integrated in the front element (2) itself. Screen geometries are not arranged in this emblem "wide segment" since the distance between a light source (7) and the perimetral edge of the emblem is sufficiently long so as to not require screening the outgoing light. The light beams generated by the light source (7) have for the most part been reflected multiple times and in multiple directions inside the reflection cavity before being extracted by means of the diffusion filter (4), favoring greater mayor homogeneity in the perimetral illumination of the emblem.

The cavity (5), which functions as an internal reflection chamber for the light beams emitted by the plurality of light sources (7), can be observed in Figures 2, 3, 6, 7, 8 and 10. Said cavity (5) is defined by the front element (2), the rear casing (3) and the light diffusion filter (4). Additionally, when the surface of the illumination circuit (6) comprising the light sources (7) is of a color that reflects light, said surface also demarcates the internal reflection cavity (5).

In the first and second embodiments (i.e. in Figures 1 and 2), the height of the internal cavity (5) (i.e. from the surface (6a) of the circuit (6) to the inner surface (2a) of the front element (2)) is comprised between 2.5 and 4 mm. In these same embodiments, the distance between the upper portion of the light source (7) and the inner surface of the front element (2) is between 0.7 and 1 mm.

The path of some of the light beams inside the cavity (5), which are internally bouncing around constantly given that they are reflected upon striking the inner walls (3a, 2b) of the casing (3) and of the front element (2), respectively, can be seen schematically in Figure 10. These light beams escape from the cavity (5) through the diffusion filter (4) only in the lateral direction, which is the only translucent portion, i.e. through a lower portion of the perimeter of the emblem (1). It must be taken into account that only the light beams emitted by this depicted light source (7) are depicted in said Figure 10, such that the light beams bouncing around constantly once they strike the rear casing (3), the front element (2) or the circuit (6) are not depicted. A light beam exiting the light source (7) and bouncing off the front element (2b), subsequently off the base (3a) of the casing (3) and then exiting through the diffusion filter (4), is depicted using a discontinuous line. Also, another light beam with an intermediate point where it bounces off the illumination circuit (6) is depicted using a discontinuous line. Additionally, a light beam emitted by the light source (7) and directly contacting the diffusion filter (4), accordingly being extracted from the cavity (5), is depicted using a continuous line.

In said Figure 10, two different examples of screen geometries (8b) are furthermore depicted: on the left a cylinder with a semi-circular base and on the right a cylinder with a triangular base, where any other geometry is possible, even a side wall partially covering the outlet of the diffuser. It can be observed how these two screen geometries (8b) make the light beams (depicted by continuous arrows) bounce off same once again towards the intermediate portion of the cavity (5), preventing excessive light beams from contacting the diffusion filter (4) and being extracted from the cavity (5) in areas nearby or closest to the light source (7).

Despite having referred to a specific embodiment of the invention, it is evident for one skilled in the art that the illuminated emblem for a vehicle which is described is susceptible to numerous variations and modifications, and that all the mentioned details can be replaced with outer technically equivalent details without departing from the scope of protection defined by the attached claims.

## Claims

1. An illuminated emblem (1) for a vehicle comprising:
- a front element (2) with the shape of a logotype, where the front element (2) is opaque, and the inner face (2b) of the front element (2) is of a color that reflects light;
- a rear casing (3) for fixing the emblem (1) to a portion of the vehicle body, where the rear casing (3) is opaque, and where the inner surface of the rear casing (3) is of a color that reflects light;
- a light diffusion filter (4) arranged between the front element (2) and the rear casing (3), where the inner space defined by the front element (2), the rear casing (3) and the diffusion filter (4) defines a cavity (5), where the contour of the diffusion filter (4) reproduces the same perimetral shape as the perimetral edge of the front element (2), wherein the diffusion filter (4) is translucent and configured to allow light to be extracted from the cavity (5); and
- at least one illumination circuit (6) arranged inside the cavity (5), where the at least one illumination circuit (6) comprises a plurality of light sources (7); where the inner face (2b) of the front element (2) and the inner surface of the rear casing (3) generate an internal reflection chamber for the light beams emitted by the plurality of light sources (7), and where the light escapes from the cavity (5) through the diffusion filter (4) only in the lateral direction, generating an indirect illumination of the perimeter of the emblem (1) on the vehicle body;
**characterized in that** the cavity (5) does not include a light guide in combination to the internal reflection chamber generated by the inner face (2b) of the front element (2) and the inner surface of the rear casing (3), and the cavity (5) functions as an internal reflection chamber for the light beams emitted by the plurality of light sources (7) and the light beams are made to internally bounce around constantly since they are reflected as they strike the reflective inner walls of the rear casing (3) and the front element (2), thereby filling the entire cavity (5) with light.

2. The emblem (1) according to claim 1, wherein the at least one illumination circuit (6) is of a color that reflects light.

3. The emblem (1) according to claim 1 or 2, wherein the color that reflects light is selected from: white or metallic color.

4. The emblem (1) according to claim 1, wherein the diffusion filter (4) is manufactured from PMMA with a treatment with particles therein which reflect the incident light in all directions.

5. The emblem (1) according to claim 1, comprising at least one light beam aperture geometry (8a) configured to open the generated light cone in at least one direction, such that it increases diffusion of the light beams inside the cavity (5).

6. The emblem (1) according to claim 5, wherein the at least one light beam aperture geometry (8a) is arranged facing one of the plurality of light sources (7).

7. The emblem (1) according to claim 6, wherein the at least one light beam aperture geometry (8a) can be selected from: structures having a cylinder or triangular prism shape for opening the light field in a specific direction; or structures having a square, rectangular or cylindrical pyramid shape for opening the light cone in all directions.

8. The emblem (1) according to claim 5, 6 or 7, wherein the at least one illumination circuit (6) is fixed in the rear casing (3), such that the plurality of light sources (7) are arranged aimed at the front element (2), and where the at least one light beam aperture geometry (8a) is arranged on the inner face (2b) of the front element (2).

9. The emblem (1) according to claim 5, 6 or 7, wherein the at least one illumination circuit (6) is fixed in the front element (2), such that the plurality of light sources (7) are arranged aimed at the rear casing (3), and where the at least one light beam aperture geometry (8a) is arranged on the inner surface of the rear casing (3).

10. The emblem (1) according to claim 1, comprising at least one light beam screen geometry (8b) configured to reduce the amount of light escaping through the diffusion filter (4), where the at least one light beam screen geometry (8b) is arranged between one of the plurality of light sources (7) and the diffusion filter (4).

11. The emblem (1) according to claim 8, wherein the at least one light beam screen geometry (8b) can be selected from: a planar wall, a cylindrical structure or triangular prism.

12. The emblem (1) according to claim 10 or 11, wherein the at least one light beam screen geometry (8b) is positioned in the cavity (5) based on the distance between one of the plurality of light sources (7) and the diffusion filter (4).

13. The emblem (1) according to claim 1, wherein at least one of the inner surfaces of the walls of the rear casing (3) or the at least one inner face (2b) of the front element (2) has a surface finish roughness, such that the incident light beams on said rough surfaces are reflected in all directions.

14. The emblem (1) according to any one of the preceding claims, wherein the light sources (7) are LEDs.

## Patentansprüche

1. Beleuchtetes Emblem (1) für ein Fahrzeug, umfassend:
- ein vorderes Element (2) in Form eines Logos, wobei das vordere Element (2) undurchsichtig ist und die innere Seite (2b) des vorderen Elements (2) eine Farbe aufweist, die Licht reflektiert;
- ein hinteres Gehäuse (3), um das Emblem (1) an einen Abschnitt des Fahrzeugkörpers zu befestigen, wobei das hintere Gehäuse (3) undurchsichtig ist, und wobei die innere Fläche des hinteren Gehäuses (3) eine Farbe aufweist, die Licht reflektiert;
- einen Lichtdiffusionsfilter (4), der zwischen dem vorderen Element (2) und dem hinteren Gehäuse (3) angeordnet ist, wobei der innere Raum, definiert durch das vordere Element (2), das hintere Gehäuse (3) und den Diffusionsfilter (4) einen Hohlraum (5) definiert, wobei der Umfang des Diffusionsfilters (4) die gleiche Umrissform wie die Umrisskante des vorderen Elements (2) reproduziert, wobei der Diffusionsfilter (4) lichtdurchlässig und konfiguriert ist, um zu ermöglichen, dass Licht vom Hohlraum (5) extrahiert wird; und
- mindestens eine Beleuchtungsschaltung (6), die innerhalb des Hohlraums (5) angeordnet ist, wobei die mindestens eine Beleuchtungsschaltung (6) eine Vielzahl von Lichtquellen (7) umfasst, und die innere Seite (2b) des vorderen Elements (2) und die innere Fläche des hinteren Gehäuses (3) eine interne Reflektionskammer für die Lichtstrahlen erzeugen, die von der Vielzahl von Lichtquellen (7) emittiert werden, und wobei das Licht aus dem Hohlraum (5) durch den Diffusionsfilter (4) nur in der seitlichen Richtung entweicht und eine indirekte Beleuchtung des Umfangs des Emblems (1) auf dem Fahrzeugkörper erzeugt;
**dadurch gekennzeichnet, dass** der Hohlraum (5) keine Lichtführung in Kombination mit der internen Reflektionskammer, erzeugt durch die innere Seite (2b) des vorderen Elements (2) und die innere Fläche des hinteren Gehäuses (3), beinhaltet, und der Hohlraum (5) als eine interne Reflektionskammer für die Lichtstrahlen funktioniert, die von der Vielzahl von Lichtquellen (7) emittiert werden, und die Lichtstrahlen veranlasst werden, intern konstant umherzuspringen, da sie reflektiert werden, wenn sie auf die reflektierenden inneren Wände des hinteren Gehäuses (3) und des vorderen Elements (2) treffen und dabei den gesamten Hohlraum (5) mit Licht erfüllen.

2. Emblem (1) nach Anspruch 1, wobei die mindestens eine Beleuchtungsschaltung (6) eine Farbe aufweist, die Licht reflektiert.

3. Emblem (1) nach Anspruch 1 oder 2, wobei die Farbe, die Licht reflektiert, ausgewählt ist aus: weißer oder metallischer Farbe.

4. Emblem (1) nach Anspruch 1, wobei der Diffusionsfilter (4) aus PMMA mit einer Behandlung mit Partikeln darin hergestellt ist, die das einfallende Licht in alle Richtungen reflektieren.

5. Emblem (1) nach Anspruch 1, umfassend mindestens eine Lichtstrahlöffnungsgeometrie (8a), die konfiguriert ist, um den erzeugten Lichtkegel in mindestens eine Richtung zu öffnen, so dass er die Diffusion der Lichtstrahlen innerhalb des Hohlraums (5) erhöht.

6. Emblem (1) nach Anspruch 5, wobei die mindestens eine Lichtstrahlöffnungsgeometrie (8a), gegenüber einer der Vielzahl von Lichtquellen (7) angeordnet ist.

7. Emblem (1) nach Anspruch 6, wobei die mindestens eine Lichtstrahlöffnungsgeometrie (8a) ausgewählt sein kann aus:
Strukturen mit einer Zylinder- oder Dreiecksprismenform, um das Lichtfeld in einer spezifischen Richtung zu öffnen; oder Strukturen mit einer quadratischen, rechtwinkligen oder zylindrischen Pyramidenform, um den Lichtkegels in alle Richtungen zu öffnen.

8. Emblem (1) nach Anspruch 5, 6 oder 7, wobei die mindestens eine Beleuchtungsschaltung (6) an das hintere Gehäuse (3) befestigt ist, so dass die Vielzahl von Lichtquellen (7) auf das vordere Element (2) ausgerichtet angeordnet ist, und wobei die mindestens eine Lichtstrahlöffnungsgeometrie (8a) auf der inneren Seite (2b) des vorderen Elements (2) angeordnet ist.

9. Emblem (1) nach Anspruch 5, 6 oder 7, wobei die mindestens eine Beleuchtungsschaltung (6) im vorderen Element (2) befestigt ist, so dass die Vielzahl von Lichtquellen (7) auf das hintere Gehäuse (3) ausgerichtet angeordnet ist, und wobei die mindestens eine Lichtstrahlöffnungsgeometrie (8a) auf der inneren Fläche des hinteren Gehäuses (3) angeordnet ist.

10. Emblem (1) nach Anspruch 1, umfassend mindestens eine Lichtrstrahlschirmgeometrie (8b), die konfiguriert ist, um die Menge von Licht zu reduzieren, die durch den Diffusionsfilter (4) entweicht, wobei die mindestens eine Lichtrstrahlschirmgeometrie (8b) zwischen einer der Vielzahl von Lichtquellen (7) und dem Diffusionsfilter (4) angeordnet ist.

11. Emblem (1) nach Anspruch 8, wobei die mindestens eine Lichtrstrahlschirmgeometrie (8b) ausgewählt sein kann aus: einer planaren Wand, einer zylindrischen Struktur oder einem Dreiecksprisma.

12. Emblem (1) nach Anspruch 10 oder 11, wobei die mindestens eine Lichtrstrahlschirmgeometrie (8b) im Hohlraum (5) basierend auf dem Abstand zwischen einer der Vielzahl von Lichtquellen (7) und dem Diffusionsfilter (4) angeordnet ist.

13. Emblem (1) nach Anspruch 1, wobei mindestens eine der inneren Flächen der Wände des hinteren Gehäuses (3) oder mindestens eine innere Fläche (2b) des vorderen Elements (2) eine derartige Oberflächengüterauigkeit aufweist, dass die auf die rauen Oberflächen auftreffenden Lichtstrahlen in alle Richtungen reflektiert werden.

14. Emblem (1) nach einem der vorhergehenden Ansprüche, wobei die Lichtquellen (7) LEDs sind.

## Revendications

1. Emblème (1) éclairé pour un véhicule comprenant :
un élément avant (2) avec la forme d'un logo, dans lequel l'élément avant (2) est opaque, et la face interne (2b) de l'élément avant (2) a une couleur qui réfléchit la lumière ;
un boîtier arrière (3) pour fixer l'emblème (1) sur une partie du corps de véhicule, dans lequel le boîtier arrière (3) est opaque, et dans lequel la surface interne du boîtier arrière (3) est d'une couleur qui réfléchit la lumière ;
un filtre de diffusion de lumière (4) agencé entre l'élément avant (2) et le boîtier arrière (3), dans lequel l'espace interne défini par l'élément avant (2), le boîtier arrière (3) et le filtre de diffusion (4) définit une cavité (5), dans lequel le contour du filtre de diffusion (4) reproduit la même forme périmétrale que le bord périmétral de l'élément avant (2), dans lequel le filtre de diffusion (4) est translucide et configuré pour permettre d'extraire la lumière de la cavité (5) ; et
au moins un circuit d'éclairage (6) agencé à l'intérieur de la cavité (5), dans lequel le au moins un circuit d'éclairage (6) comprend une pluralité de sources de lumière (7) ; dans lequel la face interne (2b) de l'élément avant (2) et la surface interne du boîtier arrière (3) génèrent une chambre de réflexion interne pour les faisceaux lumineux émis par la pluralité de sources de lumière (7), et dans lequel la lumière s'échappe de la cavité (5) par le filtre de diffusion (4) uniquement dans la direction latérale, générant un éclairage indirect du périmètre de l'emblème (1) sur le corps de véhicule ;
**caractérisé en ce que** la cavité (5) ne comprend pas de guide de lumière en combinaison avec la chambre de réflexion interne générée par la face interne (2b) de l'élément avant (2) et la surface interne du boîtier arrière (3), et la cavité (5) fonctionne comme une chambre de réflexion interne pour les faisceaux lumineux émis par la pluralité de sources de lumière (7) et les faisceaux lumineux sont faits pour rebondir intérieurement de manière constante étant donné qu'ils sont réfléchis lorsqu'ils heurtent les parois internes réfléchissantes du boîtier arrière (3) et l'élément avant (2), remplissant ainsi toute la cavité (5) de lumière.

2. Emblème (1) selon la revendication 1, dans lequel le au moins un circuit d'éclairage (6) est d'une couleur qui réfléchit la lumière.

3. Emblème (1) selon la revendication 1 ou 2, dans lequel la couleur qui réfléchit la lumière est sélectionnée parmi : le blanc ou une couleur métallique.

4. Emblème (1) selon la revendication 1, dans lequel le filtre de diffusion (4) est fabriqué à partir de PMMA avec un traitement avec des particules à l'intérieur qui réfléchissent la lumière incidente dans toutes les directions.

5. Emblème (1) selon la revendication 1, comprenant au moins une géométrie d'ouverture de faisceau lumineux (8a) configurée pour ouvrir le cône de lumière généré dans au moins une direction, de sorte qu'il augmente la diffusion des faisceaux lumineux à l'intérieur de la cavité (5).

6. Emblème (1) selon la revendication 5, dans lequel la au moins une géométrie d'ouverture de faisceau lumineux (8a) est agencée pour faire face à l'une de la pluralité de sources de lumière (7).

7. Emblème (1) selon la revendication 6, dans lequel la au moins une géométrie d'ouverture de faisceau lumineux (8a) peut être sélectionnée parmi : des structures ayant une forme de cylindre ou prismatique triangulaire pour ouvrir le champ de lumière dans une direction spécifique ; ou des structures ayant une forme pyramidale carrée, rectangulaire ou cylindrique pour ouvrir le cône de lumière dans toutes les directions.

8. Emblème (1) selon la revendication 5, 6 ou 7, dans lequel le au moins un circuit d'éclairage (6) est fixé dans le boîtier arrière (3), de sorte que la pluralité de sources de lumière (7) sont agencées au niveau de l'élément avant (2), et dans lequel la au moins une géométrie d'ouverture de faisceau lumineux (8a) est agencée sur la face interne (2b) de l'élément avant (2).

9. Emblème (1) selon la revendication 5, 6 ou 7, dans lequel le au moins un circuit d'éclairage (6) est fixé dans l'élément avant (2), de sorte que la pluralité de sources de lumière (7) est agencée au niveau du boîtier arrière (3), et dans lequel la au moins une géométrie d'ouverture de faisceau lumineux (8a) est agencée sur la surface interne du boîtier arrière (3).

10. Emblème (1) selon la revendication 1, comprenant au moins une géométrie d'écran de faisceau lumineux (8b) configurée pour réduire la quantité de lumière s'échappant par le filtre de diffusion (4), dans lequel la au moins une géométrie d'écran de faisceau lumineux (8b) est agencée entre l'une de la pluralité de sources de lumière (7) et le filtre de diffusion (4).

11. Emblème (1) selon la revendication 8, dans lequel la au moins une géométrie d'écran de faisceau lumineux (8b) peut être sélectionnée parmi : une paroi planaire, une structure cylindrique ou un prisme triangulaire.

12. Emblème (1) selon la revendication 10 ou 11, dans lequel la au moins une géométrie d'écran de faisceau lumineux (8b) est positionnée dans la cavité (5) sur la base de la distance entre l'une de la pluralité de sources de lumière (7) et le filtre de diffusion (4).

13. Emblème (1) selon la revendication 1, dans lequel au moins l'une des surfaces internes des parois du boîtier arrière (3) et la au moins une face interne (2b) de l'élément avant (2) a une rugosité de finition de surface, de sorte que les faisceaux lumineux incidents sur lesdites surfaces rugueuses sont réfléchis dans toutes les directions.

14. Emblème (1) selon l'une quelconque des revendications précédentes, dans lequel les sources de lumière (7) sont des diodes électroluminescentes.
